# EUROPEAN PATENT APPLICATION

(11) **EP 2 782 036 A1**
(43) Date of publication of application: **24.09.2014**
(21) Application number: 13193507.4
(22) Date of filing: 19.11.2013
(51) Int. Cl.: G06F 21/44

(54) **Authentication method and system for use thereof**

(30) Priority: 20.03.2013 TW 102109853
(71) Applicant: Compal Broadband Networks Inc., 114 Taipei City (TW)
(72) Inventor: Li, Tzu-Chieh, 503 Changhua County (TW)
(74) Representative: Becker Kurig Straus

(57) **Abstract**

An authentication method (20) for an authentication system (10) includes executing an application program in a host device (100); the application program obtaining a first service code; the application program determining whether the host device (100) is legal according to a check information; the application program transmitting an authentication request to an electronic device (102) obtaining a first validation value when the application program determines the host device (100) is legal; and the application program performing an encryption computation according to the first validation value, the first service code, and an authentication private key, and generating a response value for the electronic device (102); wherein the electronic device (102) performs a decryption computation corresponding to the encryption computation according to the authentication private key and the response value to obtain the second validation value and the second service code to determine whether to open a service.

## Description

### Field of the Invention

The invention relates to an authentication method and an authentication system, and especially relates to an authentication method and an authentication system capable of rapidly and securely performing an authentication with an electronic device.

### Background of the Invention

To ensure secure access to services of an electronic device, the electronic device is required to perform an authentication with a host device by wired or wireless transmitting media, so as to open the provided services. For example, when the electronic device is a modem with multiple functionalities, the electronic device not only has a network accessing functionality as a modem, but also has additional functionalities, such as wireless sharing, wireless bridge, network server, or network phone, etc. Thus, when a user wants to access the additional functionalities of the modem (such as the network phone, wireless sharing, or etc.), the user is required to utilize a host device to communicate with the modem to perform an authentication for authorizing the access of the additional functionalities, such as accessing the network phone functionality of the modem to call a network call.

In an authentication method of the prior art, the user inputs a validation information into the host device, and the user transmits the validation information to the electronic device by the host device. The validation information may be an identification code of the user or a password, etc, for opening the services of the electronic device. After the electronic device receives the validation information, the electronic device compares the validation information with an authentication data stored in a database to determine whether to open the services according to a comparing result.

However, since the user in the prior art is required to input the validation information by a manual method for performing the authentication and the user manually inputs the validation information every time for the authentication, the step for performing the authentication is time-consuming and troublesome. Furthermore, the validation information is transmitted to the electronic device by the host device through public transmission media, and the validation information is easy to be intercepted and obtained due to the public transmission media. For example, network packages transmitted from the host device to the electronic device may be intercepted on the public transmission media, and the validation information may be obtained by analyzing the network packages, so as to arbitrarily open the services of the electronic device. Thus, how to rapidly and securely perform the authentication is one of the most important topics.

### Summary of the Invention

The present invention aims at providing an authentication method and an authentication system capable of rapidly and securely performing an authentication with an electronic device to open services of the electronic device.

This is achieved by an authentication method and an authentication system according to the independent claims here below. The dependent claims pertain to corresponding further developments and improvements.

As will be seen more clearly from the detailed description following below, the claimed authentication method is utilized for an authentication system, wherein the authentication system comprises a host device and an electronic device. The authentication method comprises executing an application program in the host device; the application program obtaining a first service code; the application program determining whether the host device is legal according to a check information; the application program transmitting an authentication request to the electronic device for obtaining a first validation value when the application program determines the host device is legal; and the application program performing an encryption computation according to the first validation value, the first service code, and an authentication private key to generate a response value for the electronic device; wherein the electronic device performs a decryption computation corresponding to the encryption computation according to the authentication private key and the response value to obtain a second validation value and a second service code for determining whether to open a service.

In another aspect, as will be seen more clearly from the detailed description following below, the claimed authentication system comprises an electronic device; and a host device. The host device comprises a processor; and a storage device, storing a program code to indicate to the processor to perform an authentication method for the authentication system, and the authentication method comprising obtaining a first service code; determining whether the host device is legal according to a check information; transmitting an authentication request to the electronic device and obtaining a first validation value when determining the host device is legal; and performing an encryption computation according to the first validation value, the first service code, and an authentication private key to generate a response value for the electronic device; wherein the electronic device performs a decryption computation corresponding to the encryption computation according to the authentication private key and the response value to obtain a second validation value and a second service code to determine whether to open a service.

### Brief Description of the Drawings

The invention is further illustrated by way of example with reference to the accompanying drawings. Thereof,
FIG. 1 is a schematic diagram of an authentication system according to an embodiment of the present invention,
FIG. 2 is a schematic diagram of an authentication process according to an embodiment of the present invention, and
FIG. 3 is a schematic diagram of a service opening process according to an embodiment of the present invention.

### Detailed Description

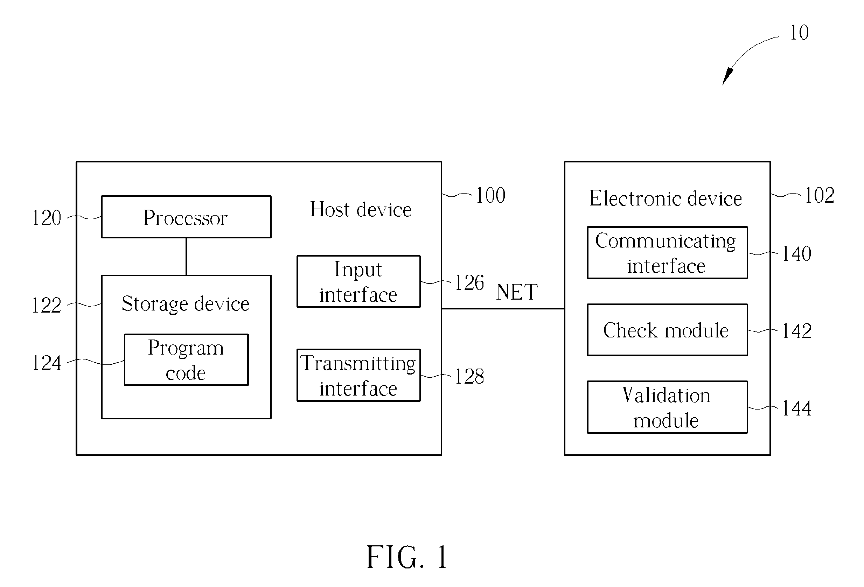

FIG. 1 is a schematic diagram of an authentication system 10 according to an embodiment of the present invention. As shown in FIG. 1, the authentication system 10 includes a host device 100 and an electronic device 102. The host device 100 communicates with the electronic device 102 by a transmitting medium NET to transmit information to the electronic device 102 and perform an authentication with the electronic device 102, so as to open provided services of the electronic device 102. The host device 100 includes a processor 120, a storage device 122, an input interface 126, and a transmitting interface 128. The process 120 may be a microprocessor or an application-specific integrated circuit (ASIC), etc. The storage device 122 may be a read-only memory (ROM), a random-access memory (RAM), a CD-ROMs, a magnetic tape, a floppy disk, an optical data storage device, or etc. The input interface 126 may be a wireless or a wired keyboard, a touch screen, a handwriting pad, a menu, or hardware and software capable of receiving and recognizing a voice, etc. The transmitting interface 128 may be a wireless transmission interface according to the Wi-Fi™ standard (i.e. complying with the IEEE 802.11 standard) or a wired transmission interface according to the Ethernet network standard. The transmitting interface 128 may be implemented by an internal program or hardware capable of performing the network transmission protocol, such that the host device 100 has the wireless or wired communication capability. In addition, the transmitting interface 128 may also be a universal serial bus (USB), and is not limited hereinafter.

The electronic device 102 provides the services as required by the user. For example, when the electronic device 102 is a modem with multiple functionalities, the electronic device 102 may provide a service of network access for the user, and the electronic device 102 may also provide services of network phone or network server, etc. In addition, the electronic device 102 may also be a storage device to provide a service of network storage for the user to store data.

The electronic device 102 includes a communicating interface 140, a check module 142, and a validation module 144. The communicating interface 140 communicates with the transmitting interface 128 of the host device 100 through the transmitting medium NET, and the communicating interface 140 may be wireless or wired transmission interface. When the communication between the communicating interface 140 and the transmitting interface 128 is based on a network transmission, the electronic device 102 may transfer information with the host device 100 according to a network transmission protocol, such as a simple network management protocol (SNMP), for performing the authentication. The check module 142 and the validation module 144 are configured for performing the authentication with the host device 100 to determine whether to open the services according to a validation result of the authentication.

When the user wants to access the service of the electronic device 102, the user is required to provide an application of the service of the electronic device 102 to a service manager. That is, the user needs to previously provide a validation information utilized for opening the service to the service manager, and the validation information includes a host information of the host device 100, an account, or a password, etc, which is not limited hereinafter. The service manager adds the validation information into an application program utilized for opening the service of the host device 100 and also adds the validation information into a validation database of the electronic device 102. The application program of the host device 100 may be compiled as a program code 124 to indicate to the processor 120 to perform the authentication with the electronic device 102, so as to open the service of the electronic device 102.

In other words, the application program is executed in the host device 100, and the application program utilizes the validation information authorized by the service manager to perform the verification with the validation information stored in the validation database of the electronic device 102. The user is not required to input the authentication into the host device 100 and the authentication with the electronic device 102 may be rapidly performed. Then, the electronic device 102 determines whether to open the service according to the validation result of the authentication.

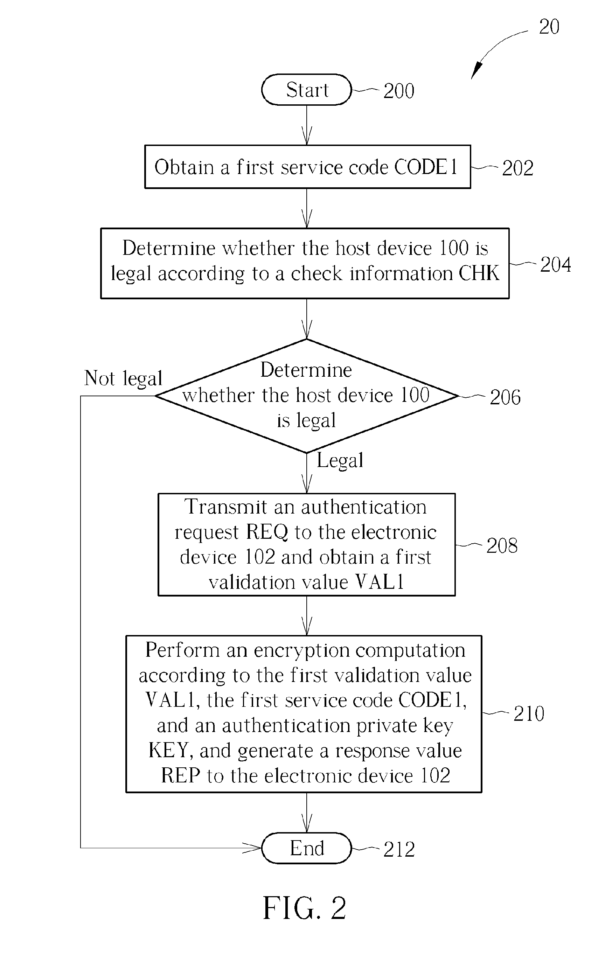

Specifically, the authentication system 10 utilizes the host device 100 to execute the application program to perform the authentication with the electronic device 102 for opening the service of the electronic device 102. FIG. 2 is a schematic diagram of an authentication process 20 according to an embodiment of the present invention. In the embodiment, the authentication process 20 may be compiled as the program code 124 storing in the storage device 122 to indicate to the processor 120 to perform the authentication process 20. As shown in FIG. 2, the authentication process 20 includes the following steps:
- Step 200:: start.
- Step 202:: obtain a first service code CODE1.
- Step 204:: determine whether the host device 100 is legal according to a check information CHK.
- Step 206:: if the host device 100 is legal proceed to step 208, otherwise proceeded to step 212.
- Step 208:: transmit an authentication request REQ to the electronic device 102 and obtain a first validation value VAL1.
- Step 210:: perform an encryption computation according to the first validation value VAL1, the first service code CODE1, and an authentication private key KEY, and generate a response value REP to the electronic device 102.
- Step 212:: end.

According to the authentication process 20, the electronic device 102 performs a decryption computation corresponding to the encryption computation according to the authentication private key KEY and the response value REP to obtain the second validation value VAL2 corresponding to the first validation value VAL1 and the second service code CODE2 corresponding to the first service code CODE1 which can determine whether to open the services.

In step 202, when the host device 100 executes the application program, the host device 100 may obtain the first service code CODE1 by manual input of a user through the input interface 126, such as inputting by the keyboard, writing by the touch screen, or inputting by a voice, etc. The first service code CODE1 is a code for representing various services of the electronic device 102. For example, when a network phone service of the electronic device 102 is required to be opened by the user, the user inputs a service code A. When a network server service of the electronic device 102 is required to be opened by the user, the user inputs a service code B. The first service code CODE1 is utilized for informing the host device 100 that which service of the electronic device 102 is required to be opened, so as to perform the authentication corresponding to the service with the electronic device 102.

In step 204, the application program obtains the host information of the host device 100, and the host information includes a hardware data and a software data of the host device 100. For example, when the host device 100 is a smart phone, the host information may be an identification code of the smart phone, a media access control (MAC) address, or a software file for identifying, etc. Next, the application program checks whether the host information exists in the check information CHK stored in the application program. When the host information exists in the check information CHK, the host device 100 is determined as a legal device and the host device 100 may be utilized to perform the authentication with the electronic device 102.

Noticeably, the check information CHK is also added into the application program by the service managers. When the user wants to access the service of the electronic device 102, the user provides the application to the service manager, and the user also provides the host information of the host device 100 in the application to the service manager. Thereby, the service manager may add the host information into the application program to form the check information CHK, and the application program may check whether the host device 100 is a legal device for the authentication according to the check information CHK.

In step 206, when the application program determines the host device 100 is legal, step 208 is performed. When the application program determines the host device 100 is not legal, the application program stops the authentication process 20 and the service of the electronic device 102 may not be opened.

In step 208, the application program transmits the authentication request REQ to the electronic device 102 for informing the electronic device 102 to open the serve corresponding to the first service code CODE1, i.e. requesting the electronic device 102 to perform the authentication corresponding to the first service code CODE1. The authentication request REQ includes a validation information, such as an identification number of the user, a password, the first service code CODE1, or etc, which also may be added according to actual requirements and are not limited.

Noticeably, the validation information is simultaneously added into the application program of the host device 100 and the validation database of the electronic device 102 by the service manager. Thus, when the electronic device 102 receives the authentication request REQ from the host device 100, the check module 142 of the electronic device 102 performs a checking process to compare the validation information of the authentication request REQ with the validation information of the validation database to generate the validation result. Then, the electronic device 102 transmits the first validation value VAL1 corresponding to the validation result to the host device 100 for performing the following encryption and decryption computation. In other words, when the validation result is correct, the first validation value VAL1 is generated to represent the authentication request REQ of the host device 100 is legal. When the validation result is wrong, the first validation value VAL1 is generated to represent the authentication request REQ of the host device 100 is not legal.

In step 210, when the host device 100 receives the first validation value VAL1 from the electronic device 102, the host device 100 performs the encryption computation on the first validation value VAL1, the first service code CODE1, and the authentication private key KEY to generate the response value REP to the electronic device 10. The encryption computation may be performed according to a symmetric algorithm or a non-symmetric algorithm. In other words, the response value REP is encrypted from the first validation value VAL1 and the first service code CODE1. Thus, the response value REP may avoid being obtained or its encryption cracked, and the services of the electronic device 102 may also be avoided to be opened arbitrarily.

Furthermore, when the electronic device 102 receives the response value REP from the host device 100, the validation module 144 of the electronic device 102 performs the decryption computation corresponding to the encryption computation according to the same authentication private key KEY and the response value REP. Since the decryption computation and the encryption computation are corresponding, and the authentication private key KEY in the host device 100 are the same with the authentication private key KEY in the electronic device 102, the electronic device 10 may obtain a second validation value VAL2 corresponding to the first validation value VAL1 and the second service code CODE2 corresponding to the first service code CODE1 by performing the decryption computation. Under such a condition, the validation module 144 may determine whether the second validation value VAL2 is legal. When the second validation value VAL2 is not legal (such as the validation information is wrong or the computing results of the encryption and decryption computation are not equal), the electronic device 102 may not open the service. When the second validation value VAL2 is legal, the electronic device 102 opens the service corresponding to the second service code CODE2.

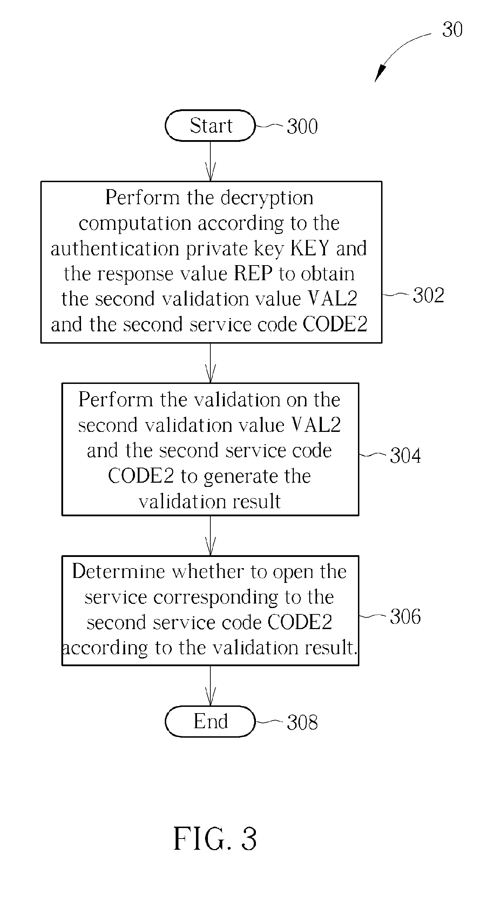

The operations of the electronic device 102 opening the service may also be summarized as a service opening process 30 performed in the validation module 144 of the electronic device 102. FIG. 3 is a schematic diagram of the service opening process 30 according to an embodiment of the present invention. As shown in FIG. 3, the service opening process 30 includes the following process:
- Step 300:: start.
- Step 302:: perform the decryption computation according to the authentication private key KEY and the response value REP to obtain the second validation value VAL2 and the second service code CODE2.
- Step 304:: perform the validation on the second validation value VAL2 and the second service code CODE2 to generate the validation result.
- Step 306:: determine whether to open the service corresponding to the second service code CODE2 according to the validation result.
- Step 308:: end.

In short, in the authentication system 10, the host device 100 executes the application program validated by the service manager to obtain the validation information. In addition to check the legality of the host device 100, the step of inputting the validation information for every authentication may be eliminated to rapidly perform the authentication. Furthermore, since the encryption computation and the decryption computation are performed by the same private key simultaneously stored in the host device 100 and the electronic device 102, the authentication between the host device 100 and the electronic device 102 may be more secure and will not be cracked easily.

Specifically, the present invention utilizes the host device 100 to execute the application program validated by the service manager to rapidly perform the authentication with the electronic device 102, and the present invention utilizes the encryption and decryption computation to protect the transferring information required for the authentication. Those skilled in the art can make modifications or alterations accordingly. For example, in the embodiment, the host device 100 performs the authentication request with the electronic device 102 and then performs the encryption/decryption computation with the electronic device 102. However, in other embodiments, the host device 100 may also simultaneously perform the authentication request and the encryption/decryption computation with the electronic device 102, which is not limited.

Moreover, in the embodiment, the host device 100 performs the encryption computation according to the first validation value VAL1, the authentication private key KEY, and the first service code CODE1 to generate the response value REP to the electronic device 102, and the electronic device 102 performs the decryption computation for the authentication. However, in other embodiments, the host device 100 may also perform the encryption computation only on the first validation value VAL1, and the electronic device 102 performs the decryption computation only to obtain the second validation value VAL2 corresponding to the first validation value VAL1. The methods for protecting the information of the authentication by the encryption/decryption computation are all adapted to the present invention, and can make different modifications accordingly.

In summary, the user is required in the prior art to input the validation information by a manual method for performing the authentication, and the step for performing the authentication is time-consuming and troublesome. Furthermore, the validation information is transmitted to the electronic device by the host device through public transmission media and the validation information is easy to be intercepted and obtained due to the public transmission media, so as to arbitrarily open to the public the services of the electronic device. In comparison, the present invention utilizes the host device to execute the application program including the validation information validated by the service manager to perform the authentication with the electronic device. Not only the authentication may be rapidly performed by the stored validation information in the application program, but also the authentication may be more secure by utilizing the encryption/decryption computation to protect the transferring information for the authentication.

## Claims

1. An authentication method (20) for an authentication system (10), wherein the authentication system (10) comprises a host device (100) and an electronic device (102), the authentication method (20) **characterized by:**
executing an application program in the host device (100);
the application program obtaining a first service code;
the application program determining whether the host device (100) is legal according to a check information;
the application program transmitting an authentication request to the electronic device (102) and obtaining a first validation value when the application program determines the host device (100) is legal;
the application program performing an encryption computation according to the first validation value, the first service code, and an authentication private key to generate a response value for the electronic device (102); and the electronic device (102) performing a decryption computation, corresponding to the encryption computation, by using the authentication private key and the response value to obtain a second validation value and a second service code to determine whether to open a service.

2. The authentication method (20) of claim 1, further **characterized in that** the application program obtains the first service code by manual input of a user.

3. The authentication method (20) of claim 1, further **characterized in that** the step of the application program determining whether the host device (100) is legal according to the check information comprises:
the application program obtaining a host information of the host device (100);
the application program checking whether the host information of the host device (100) exists in the check information; and
the application program determining the host device (100) is legal when the host information of the host device (100) exists in the check information;
wherein the check information is pre-stored in the application program and comprises at least one host information corresponding to at least one legal host device.

4. The authentication method (20) of claim 3, further **characterized in that** the host information comprises a hardware data and a software data of the host device (100).

5. The authentication method (20) of any one of claims 1-4, further **characterized in that** the step of the application program transmitting the authentication request to the electronic device (102) and obtaining the first validation value when the application program determines the host device (100) is legal comprises:
the application program generating the authentication request to transmit to the electronic device (102) when the application program determines the host device (100) is legal, wherein the authentication request comprises a validation information of the host device (100);
the electronic device (102) receiving the authentication request and generating the first validation value to transmit to the host device (100) according to the validation information of the host device (100); and
the application program obtaining the first validation value.

6. The authentication method (20) of any one of claims 1-5, further **characterized in that** the step of the electronic device (102) performing the decryption computation, corresponding to the encryption computation, by using the authentication private key and the response value to obtain the second validation value and the second service code to determine whether to open the service comprises:
the electronic device (102) performing the decryption computation according to the authentication private key and the response value to obtain the second validation value and the second service code;
the electronic device (102) performing a verification on the second validation value and the second service code to generate a verification result; and
the electronic device (102) determining whether to open the service corresponding to the second service code according to the verification result.

7. The authentication method (20) of any one of claims 1-6, further **characterized by** performing the encryption computation and the decryption computation according to a symmetric algorithm.

8. An authentication system (10) **characterized by:**
an electronic device (102); and
a host device (100), comprising:
a processor (120); and
a storage device (122), storing a program code (124) which indicates to the processor (120) to perform an authentication method (20) for the authentication system (10) according to claim 1.

9. The authentication system (10) of claim 8, further **characterized in that** the host device (100) further comprises an input interface (126) for obtaining the first service code by manual input of a user.

10. The authentication system (10) of claim 8 or 9, further **characterized in that** the authentication method (20) further comprises the steps according to claim 3.

11. The authentication system (10) of claim 10, further **characterized in that** the host information comprises a hardware data and a software data of the host device (100).

12. The authentication system (10) of any one of claims 8-11, further **characterized in that** the authentication method (20) further comprises the steps according to claim 5.

13. The authentication system (10) of any one of claims 8-12, further **characterized in that** the authentication method (20) further comprises the steps according to claim 6.

14. The authentication system (10) of any one of claims 8-13, further **characterized in that** the encryption computation and the decryption computation are performed according to a symmetric algorithm.

## Amended claims

### Amended claims in accordance with Rule 137(2) EPC.

**1.** An authentication method (20) for an authentication system (10), wherein the authentication system (10) comprises a host device (100) and an electronic device (102), the authentication method (20) **characterized by:**
executing an application program in the host device (100);
the application program obtaining a first service code for
representing a service among at least one service of the electronic device (102);
the application program determining whether the host device (100) is legal according to a check information;
the application program transmitting an authentication
request to the electronic device (102) and obtaining a first validation value when the application program determines the host device (100) is legal;
the application program performing an encryption computation
according to the first validation value, the first service code, and an authentication key to generate a response value for the electronic device (102); and
the electronic device (102) performing a decryption
computation, corresponding to the encryption computation, by using the authentication key and the response value to obtain a second validation value and a second service code to determine whether to open a service.

**2.** The authentication method (20) of claim 1, further **characterized in that** the application program obtains the first service code by manual input of a user.

**3.** The authentication method (20) of claim 1, further **characterized in that** the step of the application program determining whether the host device (100) is legal according to the check information comprises:
the application program obtaining a host information of the
host device (100);
the application program checking whether the host
information of the host device (100) exists in the check information; and
the application program determining the host device (100)
is legal when the host information of the host device (100) exists in the check information;
wherein the check information is pre-stored in the
application program and comprises at least one host information corresponding to at least one legal host device.

**4.** The authentication method (20) of claim 3, further **characterized in that** the host information comprises a hardware data and a software data of the host device (100).

**5.** The authentication method (20) of any one of claims 1-4, further **characterized in that** the step of the application program transmitting the authentication request to the electronic device (102) and obtaining the first validation value when the application program determines the host device (100) is legal comprises:
the application program generating the authentication
request to transmit to the electronic device (102) when the application program determines the host device (100) is legal, wherein the authentication request comprises a validation information of the host device (100);
the electronic device (102) receiving the authentication
request and generating the first validation value to transmit to the host device (100) according to the validation information of the host device (100); and the application program obtaining the first validation
value.

**6.** The authentication method (20) of any one of claims 1-5, further **characterized in that** the step of the electronic device (102) performing the decryption computation, corresponding to the encryption computation, by using the authentication key and the response value to obtain the second validation value and the second service code to determine whether to open the service comprises:
the electronic device (102) performing the decryption
computation according to the authentication key and the response value to obtain the second validation value and the second service code;
the electronic device (102) performing a verification on the
second validation value and the second service code to generate a verification result; and
the electronic device (102) determining whether to open the
service corresponding to the second service code according to the verification result.

**7.** The authentication method (20) of any one of claims 1-6, further **characterized by** performing the encryption computation and the decryption computation according to a symmetric algorithm.

**8.** An authentication system (10) **characterized by:**
an electronic device (102); and
a host device (100), comprising:
a processor (120); and
a storage device (122), storing a program code (124) which
indicates to the processor (120) to perform an authentication method (20) for the authentication system (10) according to claim 1.

**9.** The authentication system (10) of claim 8, further **characterized in that** the host device (100) further comprises an input interface (126) for obtaining the first service code by manual input of a user.

**10.** The authentication system (10) of claim 8 or 9, further **characterized in that** the authentication method (20) further comprises the steps according to claim 3.

**11.** The authentication system (10) of claim 10, further **characterized in that** the host information comprises a hardware data and a software data of the host device (100).

**12.** The authentication system (10) of any one of claims 8-11, further **characterized in that** the authentication method (20) further comprises the steps according to claim 5.

**13.** The authentication system (10) of any one of claims 8-12, further **characterized in that** the authentication method (20) further comprises the steps according to claim 6.

**14.** The authentication system (10) of any one of claims 8-13, further **characterized in that** the encryption computation and the decryption computation are performed according to a symmetric algorithm.
